# EUROPÄISCHE PATENTSCHRIFT

(11) **EP 1 797 345 B1**
(45) Veröffentlichungstag und Bekanntmachung des Hinweises auf die Patenterteilung: **11.03.2009**
(21) Anmeldenummer: 06805648.0
(22) Anmeldetag: 01.09.2006
(51) Int. Cl.: F16F 9/04

(54) **LUFTFEDERBALG**
PNEUMATIC SUSPENSION BELLOW
SOUFFLET DE LA SUSPENSION PNEUMATIQUE

(30) Priorität: 02.09.2005 DE 102005041800
(43) Veröffentlichungstag der Anmeldung: 20.06.2007
(73) Patentinhaber: SAF-HOLLAND GmbH, 63856 Bessenbach (DE)
(72) Erfinder: HOCK, Helmut, D-63856 Bessenbach (DE)
(74) Vertreter: Bauer, Clemens
(86) Internationale Anmeldenummer: PCT/EP2006/008573
(87) Internationale Veröffentlichungsnummer: WO 2007/025771

(56) Entgegenhaltungen:
- EP-A- 1 058 026
- US-A- 2 208 540

## Beschreibung

Die vorliegende Erfindung betrifft einen Luftbalg für eine Luftfeder, eine Luftfeder sowie ein Fahrzeugachssystem.

Herkömmlicherweise besitzt eine Fahrzeugachse eines Nutzfahrzeuges einen Achskörper, der einseitig mittels zumindest eines Längslenkers ein Achsaggregat bildet und daher am Fahrzeugrahmen beweglich angelenkt ist und gegenüber dem Fahrzeugrahmen durch jeweils eine über oder hinter dem Kreuzungsbereich von Achskörper und Längslenker angeordnete Luftfeder abgestützt ist. Die Luftfeder ihrerseits umfaßt einen zwischen einem Deckel und einer Grundplatte angeordneten Luftbalg, wobei für eine mechanische Kopplung zwischen dem Luftbalg einerseits und dem Achsaggregat andererseits ein am Luftbalg angeordneter Tauchkolben vorgesehen ist. Der Luftbalg ist an seinem achsseitigen Bereich mit dem Tauchkolben verbunden, wobei eine Außenfläche des Tauchkolbens dem Luftbalg als Abrollfläche dient, so daß eine geführte Bewegung des Luftbalgs im Betrieb bei der Auf- und Abbewegung des Tauchkolbens gewährleistet ist.

Für eine Kran- und Bahnverladung sind solche Luftfedern jedoch nur bedingt geeignet, da durch das Gewicht der dann unter dem Fahrzeug hängenden Achse der Luftbalg ohne weitere Haltevorrichtungen vollständig ausgerollt wird, wodurch in dem Luftbalg ein Unterdruck gegenüber der Umgebung erzeugt wird. Beim Absetzen des Fahrzeugs besteht die Gefahr, daß der Luftbalg nach innen einfaltet bzw. gegen den Tauchkolben verkippt bzw. einfaltet und daher nicht betriebsmäßig über den Tauchkolben abrollt, was Beschädigungen zur Folge haben kann.

Um dieses Problem zu umgehen, wird daher herkömmlicherweise bei der Kran- und Bahnverladung der Federweg der Luftfeder anhand einer an dem Fahrzeugrahmen befestigten Spann- bzw. Fangvorrichtung begrenzt bzw. ein geteilter Tauchkolben verwendet. Alternativ kann die Luftfeder auch derart ausgebildet sein, daß die Luftfeder lösbar mit dem Aufbau verbunden ist und bei einer Kranverladung des Anhängers mittels eines Rückstellgliedes die Luftfeder von dem Aufbau getrennt wird und mittels des Rückstellgliedes der Deckel und so auch der Federbalg bezüglich des Tauchkolbens in einer definierten Position gehalten wird, so dass der Federbalg über den Tauchkolben abrollt bzw. in einem abgerollten Zustand gehalten wird.

Der Erfindung liegt die Aufgabe zugrunde, eine Luftfeder bereit zu stellen, welche in einfacher Weise für eine Kranverladung von Fahrzeugen geeignet ist.

Diese Aufgabe wird gelöst durch den Luftbalg gemäß Anspruch 1, die Luftfeder gemäß Anspruch 14 und das Fahrzeugachssystem gemäß Anspruch 16. Bevorzugte Ausführungsformen sind Gegenstand der abhängigen Ansprüche.

Gemäß der vorliegenden Erfindung wird ein Luftbalg für eine Luftfeder bereitgestellt, wobei
- ein achsseitiger Bereich des Luftbalgs in einem Grundzustand eine vorgeformte Paßform aufweist,
- die Paßform derart ausgebildet ist, daß der achsseitige Bereich an einem Horn eines Tauchkolbens anordenbar ist und
- der achsseitige Bereich derart ausgelegt ist, daß bei einer Bewegung des achsseitigen Bereichs zu einem aufbauseitigen Bereich des Luftbalgs hin der achsseitige Bereich aufgrund seines Formgedächtisses zuerst die Paßform einnimmt, so dass ein Verkippen bzw. Einfalten des Luftbalgs durch die Paßform verhindert wird.

Vorzugsweise nimmt der achsseitige Bereich bei einer Bewegung zu dem aufbauseitigen Bereich des Luftbalgs hin die Paßform im wesentlichen immer ein.

Der Grundzustand des Luftbalgs im Sinne der Erfindung ist ein Zustand, in dem keine äußeren Fremdkräfte wie beispielsweise Zug-, Schub- und/oder Scherkräfte auf den Luftbalg einwirken. Insbesondere ist der Grundzustand des Luftbalgs der Zustand, in dem sich der Luftbalg befindet, wenn der in einer Luftfeder eingebaute Luftbalg beispielsweise einmal mittels Preßluft aufgeblasen wird und die Preßluft anschließend wieder aus der Luftfeder abgelassen wird, d.h. daß in dem Inneren der Luftfeder wieder Umgebungsdruck herrscht. Im Grundzustand wird an der Luftfeder nach dem Aufblasen, abgesehen von ihrer eigenen Gewichtskraft, keine weitere Kraft angelegt.

Der Luftbalg kann auch einen Betriebszustand aufweisen. Der Betriebszustand liegt beispielsweise vor, wenn die Luftfeder im herkömmlichen Betrieb angeordnet ist, wobei beispielsweise der Innendruck in dem Luftbalg von dem Umgebungsdruck verschieden ist. Der Betriebszustand liegt beispielsweise dann vor, wenn sich das Fahrzeug im herkömmlichen Einsatz befindet. Der Betriebszustand kann auch ein Zustand sein, in dem der Luftbalg entlüftet ist, wenn beispielsweise das Gerät, wie z.B. ein Anhänger eines LKWs, an dem die Luftfeder angeordnet ist, für längere Zeit geparkt ist. In diesem Fall liegt herrscht in dem Inneren des Luftbalgs, wie im Grundzustand, der Umgebungsdruck, wurde jedoch zumindest kurzfristig eine Kraft angelegt, nämlich ein Teil der Gewichtskraft des Aufbaus gegebenenfalls inklusive Ladung. Im Betriebszustand des Luftbalgs ist die Länge der Luftfeder regelmäßig kleiner als die Länge der Luftfeder im Grundzustand des Luftbalgs.

Weiterhin kann der Luftbalg einen Verladezustand aufweisen, wobei der Verladezustand dann vorliegt, wenn das Fahrzeug beispielsweise auf einen Eisenbahnwaggon kranverladen wird, d.h. das Achsaggregat an der Luftfeder hängt. In dem Verladezustand des Luftbalgs ist die Luftfeder entlang ihrer Mittellinie gemessen regelmäßig länger als in dem Grundzustand des Luftbalgs.

Wird die Luftfeder im Betriebszustand des Luftbalgs mit einem sehr hohen Innendruck beaufschlagt ist es auch möglich, daß die Luftfeder die gleichen Abmessungen aufweist, wie im Verladezustand des Luftbalgs.

Der Luftbalg kann sich auch dann in seinem Grundzustand befinden, wenn er beispielsweise von dem Tauchkolben entkoppelt ist, d.h. beispielsweise der Luftbalg alleine gelagert ist.

Wird ein Anhänger, an welchem die Luftfeder angeordnet ist, auf einen Bahnwaggon, eine Fähre oder ähnliches verladen, wird beim Anheben des Anhängers über das Chassis bzw. den Aufbau aufgrund des Achsgewichtes der Luftbalg im wesentlichen vollständig gestreckt. Bei einem Aufsetzen des Anhängers auf den Bahnwaggon bzw. auf die Fähre ist der Luftbalg insbesondere ausgelegt, den vor dem Anheben bestehenden Zustand wieder einzunehmen. Dieser Zustand kann beispielsweise der Grundzustand sein, wenn insbesondere der Luftbalg entlüftet ist, bzw. einer von dem Grundzustand abweichender Zustand, wenn der Luftbalg beispielsweise mit einem Innendruck beaufschlagt ist.

Vorzugsweise ist die Paßform des achsseitigen Bereichs derart ausgebildet, daß der Luftbalg bei einer Bewegung des achsseitigen Bereichs zu dem aufbauseitigen Bereich hin immer über den Tauchkolben abrollt.

In anderen Worten kann der Luftbalg bei einer Verladung des Anhängers auf einen Bahnwaggon bzw. eine Fähre beim Anheben des Anhängers im wesentlichen vollständig gestreckt werden. Wird der Anhänger auf dem Bahnwaggon bzw. der Fähre abgesetzt, rollt der Luftbalg über den Tauchkolben ab, auch wenn lediglich ein geringer Innendruck in dem Luftbalg vorherrscht. Ein Verkippen bzw. Einfalten des Luftbalgs wird durch die Paßform des Luftbalgs verhindert. Insbesondere rollt der Luftbalg wieder über den Tauchkolben ab, auch wenn der Luftbalg beim Verladen aufgrund eines geringen Innendrucks nach innen eingefaltet ist. Vorteilhafterweise ist es erfindungsgemäß daher nicht notwendig, den maximalen Ausfederweg beim Verladen, beispielsweise anhand eines Fangseils als bevorzugte Fang- bzw. Spannvorrichtung, zu begrenzen. Insbesondere ist es vorteilhafterweise auch nicht notwendig, den Tauchkolben geteilt auszubilden. Vielmehr werden aufgrund des erfindungsgemäßen Luftbalges die Probleme des Standes der Technik in einfacher Weise gelöst.

Vorteilhafterweise wird erfindungsgemäß sichergestellt, daß aufgrund des Formgedächtnisses des achsseitigen Bereichs dieser Luftbalgs der Luftbalg über einen äußeren Umfang des Tauchkolbens abrollt, d.h. der Luftbalg an einem äußeren Umfang des Tauchkolbens anliegt. Formgedächtnis im Sinne der vorliegenden Erfindung heißt, daß der achsseitige Bereich des Luftbalgs bei einer Bewegung des achsseitigen Bereichs des Luftbalgs zu dem aufbauseitigen Bereich des Luftbalgs hin immer bestrebt ist, zuerst die Paßform einzunehmen.

Vorzugsweise ist die Paßform so ausgelegt, daß nach einer im wesentlichen vollständigen Streckung des Luftbalgs bei einer Bewegung des achsseitigen Bereichs zu dem aufbauseitigen Bereich hin der achsseitige Bereich die Paßform aufweist.

In anderen Worten kann der Luftbalg im wesentlichen vollständig ausgedehnt bzw. gestreckt werden. Aufgrund des Formgedächtnisses des achsseitigen Bereichs des Luftbalgs nimmt jedoch bei einer Belastung der Luftfeder von außen der achsseitige Bereich im wesentlichen die Paßform ein und der Luftbalg rollt auch bei relativem Unterdruck im Inneren entlang des Tauchkolbens ab. Ein Verkippen bzw. ein unerwünschtes Einfalten des Luftbalgs wird daher vorteilhafterweise vermieden.

Durch ein im wesentlichen vollständiges Strecken des Luftbalgs, d.h. wenn die Luftfeder seine im wesentlichen größtmögliche Länge aufweist, ist es auch möglich, daß an dem achsseitigen Bereich die Paßform in dem im wesentlichen vollständig gestreckten Zustand nicht mehr vorliegt. Wird jedoch die Luftfeder belastet, d.h. bei Verringerung der Länge der Luftfeder, nimmt der achsseitige Bereich aufgrund des Formgedächtnisses des achsseitigen Bereichs zuerst wieder die Paßform an und der Luftbalg rollt daher anschließend über die Außenseite des Tauchkolbens ab.

Besonders bevorzugt ist die Paßform ausgelegt, ein Ende des Horns des Tauchkolbens im wesentlichen zu umgreifen.

Der achsseitige Bereich des Luftbalgs liegt daher im wesentlichen vollständig an dem Horn an, wobei der achsseitige Bereich des Luftbalgs zumindest an einer Spitze bzw. einem Ende des Horns anliegt und vorzugsweise auch zumindest geringfügig an den die Spitze bzw. das Ende bzw. der freie Endbereich des Horns umgebenden Flächen anliegt. In anderen Worten liegt die Paßform des achsseitigen Bereichs des Luftbalgs zumindest bereichsweise an einer Innenseite des Tauchkolbens an, umfaßt vorzugsweise die Spitze bzw. das Ende des Horns und liegt auch bereichsweise an der Außenseite des Tauchkolbens an. Die Außenseite des Tauchkolbens ist hierbei die Seite des Tauchkolbens, welche von einer Längsachse des Tauchkolbens weg zeigt, d.h. im wesentlichen mit der Umgebung in Kontakt steht. Die Innenseite des Tauchkolbens ist eine Seite, welche zu der Längsachse des Tauchkolbens hin zeigt.

Wird der Luftbalg beispielsweise beim Verladen vollständig gestreckt, ist es möglich, daß die Paßform das Horn nicht mehr umgreift, sondern vielmehr lediglich zumindest bereichsweise an der Innenseite des Tauchkolbens angeordnet ist. Der achsseitige Bereich des Luftbalgs, welcher im Grundzustand die Paßform aufweist, kann beispielsweise bereits vor dem Ende bzw. der Spitze des Horns von dem Horn des Tauchkolbens beabstandet sein. Wird jedoch der aufbauseitige Bereich des Luftbalgs gegen den achsseitigen Bereich des Luftbalgs gedrückt bzw. bewegt, wird aufgrund des Formgedächtnisses zuerst wieder die Paßform des achsseitigen Bereichs des Luftbalgs eingestellt, wobei der achsseitige Bereich gemäß seiner Paßform das Horn des Tauchkolbens dann im wesentlichen umgreift. Anschließend rollt, bei einer weiteren Bewegung des achsseitigen Bereichs auf den aufbauseitigen Bereich zu, der Luftbalg entlang des Tauchkolbens ab.

Insbesondere erstreckt sich die Paßform des achsseitigen Bereichs des Luftbalgs sowohl entlang der Innenseite des Horns des Tauchkolbens als auch zumindest teilweise entlang der Außenseite des Tauchkolbens. Somit liegt der achsseitige Bereich des Luftbalgs in seiner Paßform an dem Horn des Tauchkolbens an, wobei der achsseitige Bereich gemäß der Paßform an der Innenseite des Tauchkolbens anliegt, sich zu dem Ende des Horns des Tauchkolbens hin erstreckt und an der Außenseite des Tauchkolbens sich zu einer achsseitigen Lagerung der Luftfeder hin erstreckt. Die achsseitige Lagerung der Luftfeder kann bei unterschiedlichen Anhängern unterschiedlich positioniert sein. Die achsseitige Lagerung kann eine Tauchkolbenbefestigung oder ein Luftfederträger sein. Der Luftfederträger kann beispielsweise an einem Lenker des Achsaggregats angeordnet sein. Der achsseitige Bereich des Luftbalgs im Sinne dieser Anmeldung ist der Endbereich des Luftbalgs, der mittels des Tauchkolbens und gegebenenfalls weiterer Anordnungsmittel mit der achsseitigen Lagerung der Luftfeder verbunden ist, d.h. der Bereich des Luftbalgs, der an dem Tauchkolben angeordnet ist. Der aufbauseitige Bereich des Luftbalgs ist der Bereich des Luftbalgs, welcher mittels eines Deckels und gegebenenfalls weiterer Anordnungsmittel mit dem Aufbau verbunden ist.

Bei einer Bewegung des aufbauseitigen Bereichs des Luftbalgs zum achsseitigen Bereich des Luftbalgs hin rollt der Luftbalg an dem äußeren Umfang des Tauchkolbens zu der Achse hin ab.

Folglich weist der Querschnitt des Luftbalgs, mathematisch ausgedrückt, ein Minimum auf, wobei sich dieses Minimum - bei einer Bewegung des aufbauseitigen Bereichs des Luftbalgs auf den achsseitigen Bereich des Luftbalgs zu - achsseitig von einem Maximum der Paßform des achsseitigen Bereichs befindet und das Minimum bei dieser Bewegung zur Achse hin bewegt wird. Ebenso weist das Horn des Tauchkolbens ein Maximum auf und die Paßform des achsseitigen Bereichs des Luftbalgs liegt sowohl innenseitig als auch außenseitig dieses Maximums an dem Horn des Tauchkolbens an.

Vorzugsweise ist der achsseitige Bereich im Querschnitt im wesentlichen S-förmig. Die S-Form wird hierbei aus dem Maximum der Paßform und dem Minimum des Luftbalgs gebildet.

Weiterhin vorzugsweise weist der achsseitige Bereich eine größere Wandstärke auf als der restliche Luftbalg. Insbesondere weist die Paßform eine größere Wandstärke auf als der restliche Luftbalg.

Bevorzugt ist der Luftbalg mehrlagig aufgebaut. Besonders bevorzugt ist der achsseitige Bereich vorzugsweise zumindest im Bereich der Paßform mit Gewebelagen beispielsweise aus Metallgewebe und/oder Kunststoffgewebe und/oder Textilgewebe verstärkt, wobei die Gewebelagen auch über den Bereich der Paßform hinausragen können. Insbesondere können zusätzliche Gewebelagen im Bereich der Paßform angeordnet sein.

Besonders bevorzugt ist der Luftbalg zumindest bereichsweise mit Gewebelagen bzw. Verstärkungslagen verstärkt ist, welche die radiale Steifheit des Luftbalgs erhöhen, wobei diese Gewebelagen bevorzugt von dem achsseitigen Bereich beabstandet im sogenannten mittleren Bereich des Luftbalgs angeordnet sind.

Insbesondere sind diese Gewebelagen geschlossene Zylindersegmente, welche in dem Luftbalg eingebettet sind und beispielsweise eine Höhe von etwa 1 cm bis zur Erstreckung des Mittenbereiches, bevorzugt von etwa 3 cm bis etwa 8 cm, besonders bevorzugt von etwa 5 cm aufweisen.

Bevorzugt ist der Luftbalg aus einem rückstellfähigen Material gebildet. Insbesondere ist der Luftbalg aus einem Material gebildet, welches im achsseitigen Bereich ein Formgedächtnis aufweist, wodurch die Paßform auch nach einer im wesentlichen vollständigen Streckung des Luftbalgs und nachfolgenden Stauchung des Luftbalgs im wieder eingenommen wird.

Besonders bevorzugt besteht der Luftbalg aus Gummi oder aus Elastomerwerkstoffen mit vergleichbaren Materialeigenschaften.

Besonders bevorzugt weist der achsseitige Bereich einen Bereich auf, welcher so ausgelegt ist, daß der Luftbalg anhand eines Klemmelements an dem Tauchkolben befestigbar ist.

Vorzugsweise ist in dem achsseitigen Bereich ein Ring aus einem Metall eingearbeitet. Insbesondere ist der Ring aus dem Metall an dem achsseitigen Ende des Luftbalgs in den Luftbalg eingearbeitet.

Ein zusätzlicher Aspekt der vorliegenden Erfindung umfaßt eine Luftfeder mit einem Tauchkolben und einem erfindungsgemäßen Luftbalg.

Vorzugsweise ist der Tauchkolben der Luftfeder einteilig ausgebildet.

Ein anderer Aspekt der vorliegenden Erfindung umfaßt ein Fahrzeugachssystem mit einem starren Achskörper, wobei an dem Achskörper zumindest eine erfindungsgemäße Luftfeder angeordnet ist.

Bevorzugte Ausführungsformen der vorliegenden Erfindung werden nachfolgend anhand beiliegender Zeichnungen beispielhaft beschrieben. Es zeigt
- Figur 1:: eine schematische Schnittansicht einer Luftfeder wie sie aus dem Stand der Technik bekannt ist;
- Figur 2:: einen Teilbereich einer schematischen Schnittansicht einer Luftfeder zumindest bereichsweise gemäß einer bevorzugten Ausführungsform der vorliegenden Erfindung;
- Figur 3:: eine schematische Schnittansicht eines Luftbalgs zumindest bereichsweise gemäß einer bevorzugten Ausführungsform der vorliegenden Erfindung.

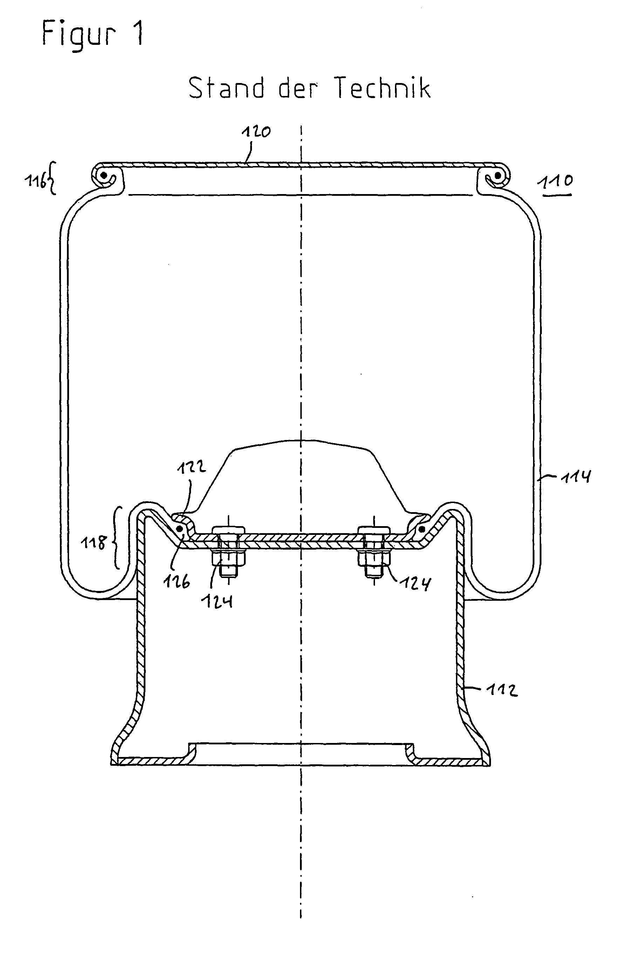

Figur 1 zeigt eine Luftfeder 110, wie sie aus dem Stand der Technik bekannt ist. Die Luftfeder 110 umfaßt einen Tauchkolben 112 sowie einen Luftbalg 114. Der Luftbalg weist einen aufbauseitigen Abschnitt bzw. Abschnitt 116 sowie einen achsseitigen Abschnitt bzw. Bereich 118 mit einem dazwischen angeordneten mittleren Bereich 117, der auch als Mittenbereich bezeichnet werden kann, auf. Der aufbauseitige Abschnitt 116 ist anhand eines Deckels 120 verschlossen. Der Deckel 120 kann beispielsweise mit einem Aufbau eines Anhängers (nicht gezeigt) verbunden sein.

Der achsseitige Abschnitt 118 ist mittels einer Klemmvorrichtung 122 mit dem Tauchkolben 112 verbunden. Vorzugsweise ist die Klemmvorrichtung 122 anhand von Verbindungsmitteln 124, insbesondere Schrauben und Muttern 124 mit dem Tauchkolben 112 verbunden, bevorzugt verschraubt. Insbesondere befindet sich ein Endbereich 126 des achsseitigen Bereichs 118 des Luftbalgs 114 zwischen der Klemmvorrichtung 122 und dem Tauchkolben 112, wodurch der Endbereich 126 des Luftbalgs 114 zwischen der Klemmvorrichtung 122 und dem Tauchkolben 112 eingeklemmt wird. Somit wird eine feste, jedoch lösbare Verbindung zwischen dem Luftbalg 114 und dem Tauchkolben 112 sichergestellt.

Der Tauchkolben 112 ist ein herkömmlicher Tauchkolben, wie er in herkömmlichen Luftfedern 110 eingesetzt wird. Der Luftbalg 114 ist ebenso ein herkömmlicher Luftbalg, wie er in herkömmlichen Luftfedern 110 eingesetzt wird, wobei der Luftbalg 114 in einfacher Weise von dem Tauchkolben 112 entfernt werden kann, indem beispielsweise die Schrauben und Muttern 124 zumindest teilweise gelöst werden und die Klemmvorrichtung 122 von dem Tauchkolben 112 beabstandet wird. Folglich wird der Endbereich 126 des Luftbalgs 114 nicht mehr zwischen der Klemmvorrichtung 122 und dem Tauchkolben 112 eingeklemmt und der Luftbalg 114 kann entfernt werden und insbesondere durch einen neuen Luftbalg 114 ersetzt werden.

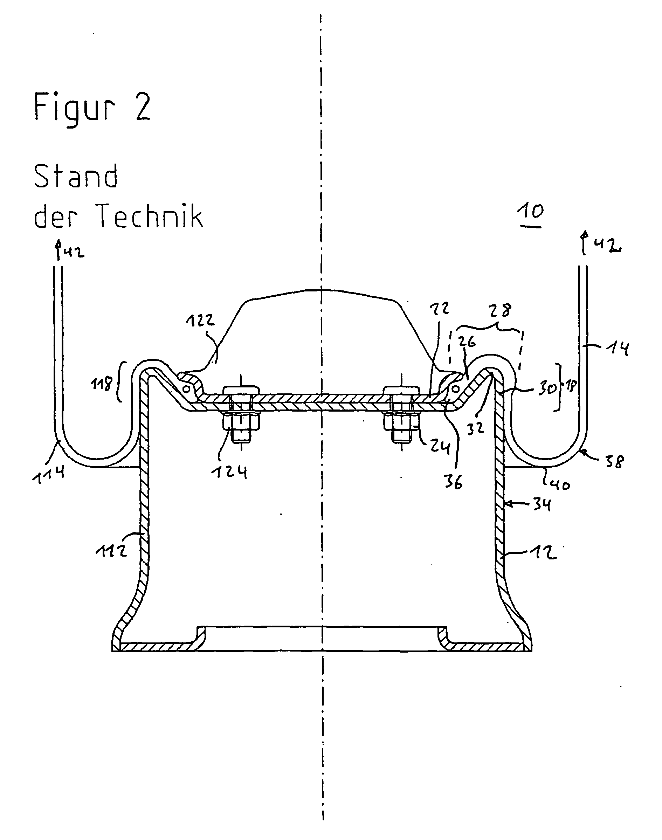

Figur 2 zeigt eine schematische Schnittansicht eines Teilbereichs einer Luftfeder 10, wobei die linke Hälfte der Luftfeder 10 einer herkömmlichen Luftfeder entspricht und die rechte Hälfte der Luftfeder 10 gemäß einer bevorzugten Ausführungsform der vorliegenden Erfindung ausgebildet ist. Entsprechend ist die Verwendung der Bezugszeichen der linken Hälfte der Luftfeder 10 identisch mit dem Bezugszeichen der Figur 1.

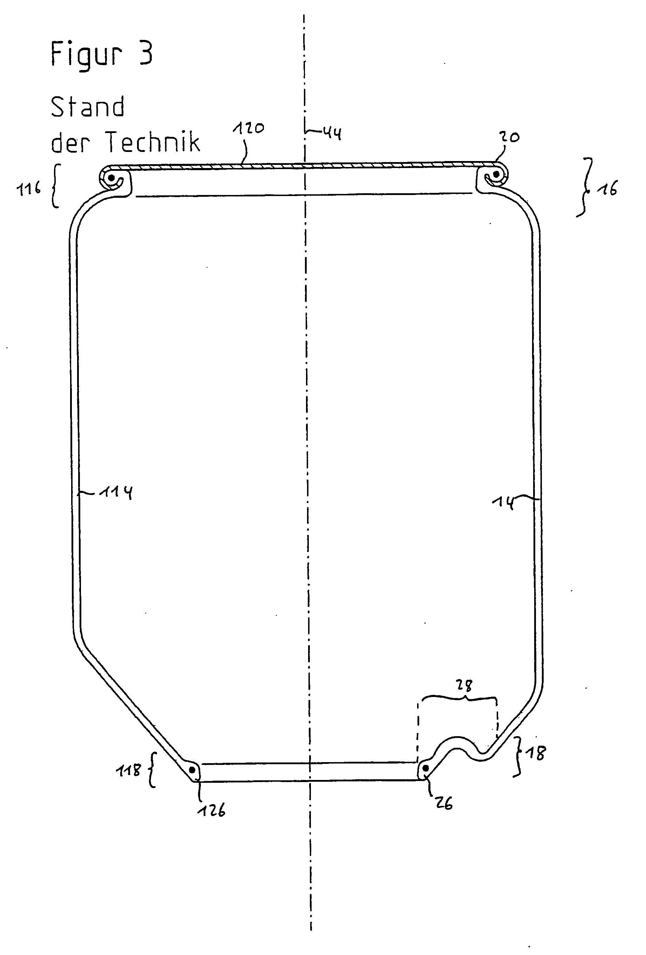

Die rechte Hälfte der Luftfeder 10 umfaßt einen Tauchkolben 12, an welchem ein Luftbalg 14 angeordnet ist. Der Luftbalg 14 hat einen aufbauseitigen Bereich bzw. Abschnitt 16 (gezeigt in Figur 3) und einen achsseitigen Bereich bzw. Abschnitt 18. Der aufbauseitige Bereich 16 des Luftbalgs 14 ist weiterhin mittels eines Deckels 20 (gezeigt in Figur 3) verschlossen und mittels einer Klemmvorrichtung 22 mit dem Tauchkolben 12 verbunden, wobei die Klemmvorrichtung 22 anhand von Verbindungsmitteln 24, wie zum Beispiel Schrauben und Muttern 24, mit dem Tauchkolben 12 verschraubt ist. Zwischen der Klemmvorrichtung 22 und dem Tauchkolben 12 ist ein Endbereich 26 des Luftbalgs 14 eingeklemmt, wodurch eine sichere Verbindung des Luftbalgs 14 mit dem Tauchkolben 12 sichergestellt ist.

Der achsseitige Bereich 18 des Luftbalgs 14 weist weiterhin eine Paßform 28 auf. Die Paßform 28 des achsseitigen Bereichs 18 ist derart ausgestaltet, daß der achsseitige Bereich 18 im wesentlichen an einem Horn 30 des Tauchkolbens 12 anliegt. In anderen Worten weist das Material des achsseitigen Bereichs 18 des Luftbalgs 14 im wesentlichen vollständig ein Formgedächtnis auf, d.h. der achsseitige Bereich 18 wird mit einer vorgegebenen Form hergestellt, nämlich der Paßform 28, wobei der achsseitige Bereich 18 durch Anlegen äußerer Kräfte an den Luftbalg 14 von der Paßform abweichen kann. Aufgrund des Formgedächtnisses der Paßform 28 des achsseitigen Bereiches 18 nimmt der achsseitige Bereich 18 nach Wegfallen der Kraft im wesentlichen wieder die Paßform 28 ein, d.h. der achsseitige Bereich 18 liegt wieder im wesentlichen an dem Horn 30 des Tauchkolbens 12 an.

Weiterhin ist in Figur 2 eine Spitze 32 des Horns 30 gekennzeichnet. Wird in der Schnittansicht die eine Oberfläche 34 des Tauchkolbens 12 darstellende Kurve mathematisch beschrieben, entspricht die Spitze 32 des Horns 30 einem Maximum dieser Kurve. Die Paßform 28 des achsseitigen Bereichs 18 liegt vorzugsweise zumindest in einem Bereich von einem Anfangspunkt 36 bis zu der Spitze 32 des Horns 30 an dem Tauchkolben an. Wie in Figur 2 dargestellt, kann die Paßform 28 auch über die Spitze 32 hinaus an dem Horn anliegen, d.h. die Paßform 28 liegt ausgehend von dem Anfangspunkt 36 über die Spitze 32 des Horns 30 hinaus an der Oberfläche 34 des Tauchkolbens an.

In dem in Figur 2 dargestellten Zustand der Luftfeder 10 ist der Luftbalg 14 zumindest teilweise über der Oberfläche 34 des Tauchkolbens 12 abgerollt. In anderen Worten kontaktiert eine Oberfläche 38 des Luftbalgs 14 zumindest bereichsweise die Oberfläche 34 des Tauchkolbens 12. Wird ferner der in Figur 2 dargestellte Schnitt durch die Oberfläche 38 des Luftbalgs 14 mathematisch dargestellt, weist die Oberfläche 38 in der Schnittansicht ein Minimum 40 auf. Das Minimum 40 liegt hierbei achsseitig von der Spitze 32 des Horns 30 des Tauchkolbens 12. Wird an dem Luftbalg 14 eine Kraft entlang einer Zugrichtung 42 angelegt, indem beispielsweise der aufbauseitige Bereich 16 des Luftbalgs 14 von dem achsseitigen Bereich 18 des Luftbalgs 14 weg bewegt wird, rollt der Luftbalg 14 über den Tauchkolben 12 ab und das Minimum 40 bewegt sich entlang der Zugrichtung 42 von der Achse (nicht gezeigt) des Anhängers (nicht gezeigt) zu dem Aufbau (nicht gezeigt) hin. Wird hingegen eine Kraft entgegen der Zugrichtung 42 an dem Luftbalg 14 angelegt, beispielsweise indem der aufbauseitige Bereich 16 des Luftbalgs 14 auf den achsseitigen Bereich 18 des Luftbalgs 14 hin bewegt wird, so bewegt sich das Minimum 40 des Luftbalgs 14 zu der Achse des Anhängers hin, wobei der Luftbalg 14 über den Tauchkolben 12 abrollt.

Beim Verladen eines Anhängers mit einer Luftfeder 10, beispielsweise auf einen Eisenbahnwaggon, wird eine Kraft an dem Luftbalg 14 beispielsweise parallel zu der Zugrichtung 42 angelegt, wobei aufgrund der Gewichtskraft der Achse insbesondere der Luftbalg 14 vollständig ausgedehnt bzw. gestreckt wird. Dadurch erreicht der Luftbalg 14 beim Verladen des Anhängers seine maximale Länge, wobei die Achse vorzugsweise mittels der Luftfeder gehalten und dadurch der Luftbalg 14 im wesentlichen vollständig gestreckt wird. In diesem Fall ist das Minimum 40 nur geringfügig achsseitig von der Spitze 32 des Horns 30 angeordnet. Das Minimum 40 kann aber auch genauso weit von der Achse des Anhängers entfernt sein, wie die Spitze 32 des Horns 30. In besonderen Fällen kann der Luftbalg 14 bei einer im wesentlichen vollständigen Streckung kein Minimum mehr aufweisen. Vielmehr geht der achsseitige Bereich 18 des Luftbalgs 14 ohne ein Minimum direkt in den restlichen Bereich des Luftbalgs 14 über. Beispielsweise kann hierbei auch aufgrund der Rückstellfähigkeit des Materials des Luftbalgs 14 der achsseitige Bereich 18 von der Paßform 28 abweichen, und somit der achsseitige Bereich 18 beispielsweise in der Umgebung der Spitze 32 des Horns 30 nicht mehr an dem Horn 30 des Tauchkolbens 12 anliegen.

Andererseits ist es auch möglich, daß der Luftbalg 14 nicht gleichmäßig gestreckt wird. Folglich ist im Querschnitt betrachtet eine Seite des Luftbalgs 14 länger als die andere Seite. Beispielsweise weist hierbei der achsseitige Bereich 18 der kürzeren Seite des Luftbalgs 14 die Paßform 28 auf und der achsseitige Bereich 18 der anderen, längeren Seite weicht von der Paßform ab.

Wird der Aufbau des Anhängers wieder auf die Achse gesetzt, d.h. drückt die Gewichtskraft des Aufbaus entgegen der Zugrichtung 42 den aufbauseitigen Bereich des Luftbalgs 14 zu der Achse hin, nimmt der achsseitige Bereich 18 des Luftbalgs 14 als erstes wieder die Paßform 28 ein. Wird weiterhin der aufbauseitige Bereich 16 des Luftbalgs 14 weiter auf den achsseitigen Bereich 18 hin bewegt (oder äquivalent der achsseitige Bereich 18 auf den aufbauseitigen Bereich 16 zu), rollt der Luftbalg 14 über das Horn 30 des Tauchkolbens 12 entlang der Oberfläche 34 des Tauchkolbens 12 ab. Folglich gewährleistet die Paßform 28 des achsseitigen Bereiches 18 des Luftbalgs 14, daß der Luftbalg 14 nicht einfaltet, sondern entlang des Tauchkolbens 12 abrollt.

Ein Verladen eines Anhängers wird hierbei in einfacher Weise sichergestellt, da auch, wenn der Luftbalg 14 im wesentlichen vollständig gestreckt ist, beim Komprimieren der Luftfeder 10 der Luftbalg 14 über den Tauchkolben 12 abrollt.

Insbesondere wird ein Einfalten des achsseitigen Bereichs 18 gegen das Horn 30 verhindert und somit das Abrollen des Luftbalgs 14 gewährleistet.

Figur 3 zeigt einen Luftbalg 14, 114, wobei in analoger Weise wie zu Figur 2 die linke Hälfte eine herkömmliche Ausführung des Luftbalgs 114 aufzeigt und die rechte Hälfte eine Ausführung des Luftbalgs 14 gemäß einer bevorzugten Ausführungsform der vorliegenden Erfindung.

Der aufbauseitige Bereich 16 des Luftbalgs 14 ist mittels des Deckels 20 verschlossen. Der achsseitige Bereich 18 des Luftbalgs 14 weist die Paßform 28 auf, wobei die Paßform 28 derart ausgelegt ist, daß der achsseitige Bereich 18 des Luftbalgs 14 zumindest bereichsweise an dem Horn 30 (gezeigt in Figur 2) anliegt. Der Luftbalg 14 ist in Figur 3 ferner gemäß einer Grundstellung bzw. des Grundzustandes des Luftbalgs 14 dargestellt, d.h. an dem Luftbalg 14 liegen keine äußeren Zug-, Spann-, Schub- oder Scherkräfte an. Somit entspricht die Darstellung des Luftbalgs 14 der Figur 3 der Form, die der Luftbalg 14 aufweist, wenn der Luftbalg 14 beispielsweise nicht mit dem Tauchkolben 12 verbunden ist. Der Luftbalg 14 weist dann die Grundstellung auf, wenn er beispielsweise auf eine Tischplatte oder den Boden gelegt wird bzw. gelagert wird.

Weiterhin muß eine Länge entlang einer Achsrichtung 44 des Luftbalgs 14 in seiner Grundstellung nicht mit einer maximalen Länge des Luftbalgs 14 übereinstimmen. Vielmehr kann die maximale Länge des Luftbalgs 14 größer sein als die Länge des Luftbalgs 14 in seiner Grundstellung, wenn beispielsweise der Luftbalg 14 entlang der Achsrichtung 44 beim Verladen gestreckt wird, wobei insbesondere die Form des achsseitigen Bereichs 18 in diesem Zustand von der Paßform 28 abweichen kann und beispielsweise die Form des achsseitigen Bereichs 18 der Form des achsseitigen Bereichs 118 eines herkömmlichen Luftbalgs 114 gleichen kann. Insbesondere ist dies der Fall, wenn beispielsweise ein Anhänger von der Straße auf einen Eisenbahnwaggon verladen wird und aufgrund der Gewichtskraft der Achse (nicht gezeigt) der Luftbalg 14 im wesentlichen vollständig gestreckt wird. Ist das Verladen abgeschlossen, d.h. drückt der Aufbau (nicht gezeigt) den aufbauseitigen Bereich 16 des Luftbalgs 14 aufgrund der Gewichtskraft des Aufbaus zur Achse hin, nimmt der achsseitige Bereich 18 als erstes wieder die Paßform 28 ein, bevor der Luftbalg 14 weiter über das Horn 30 entlang der Fläche 34 des Tauchkolbens 12 abrollt. Dadurch wird sichergestellt, daß der achsseitige Bereich 18 nicht einfaltet bzw. verkantet und der Luftbalg 14 über den Tauchkolben 12 abrollt. Somit wird erfindungsgemäß ein einfaches Verladen eines Anhängers erreicht, wobei keine komplizierte Ausgestaltung des Tauchkolbens 12, beispielsweise als zweiteiliger Tauchkolben oder als bewegbarer Tauchkolben, notwendig ist.

Ein zusätzliches Verstärken des Luftbalgs 14 durch das Einbringen bereichsweiser, den Luftbalg vorzugsweise radial umlaufender Gewebelagen 29, bevorzugt im mittleren Bereich 17 angeordnet, unterstützt das gewünschte Abrollverhalten insbesondere bei Luftbälgen 14 mit großen Außendurchmessern. Die Gewebelagen können auch die Form von einem oder mehreren radialen Außenringen aufweisen, die voneinander beabstandet oder auch direkt aneinanderliegend angeordnet sein können. Die Außenringe können durch eingelegte Verstärkungslagen bzw. Gewebelagen gebildet werden, die im Material des Luftbalgs angeordnet sind oder innen- oder außenseitig auf der Luftbalgmaterialoberfläche aufgebracht werden.

Der Versteifungseffekt kann aber auch alleine durch geeignete Konfiguration im Luftbalgmaterial, z.B. wellschlauchartig, erzeugt werden, ohne das es dabei zwangsläufig zusätzlicher Verstärkungseinlagen in diesen Bereichen bedarf; insoweit könnte das Material des Luftbalges bzw. dessen Wandstärke in den Verstärkungsbereichen sogar beibehalten oder auch gezielt variiert werden. Als Konfiguration wäre es demnach denkbar, sich im Querschnitt des Luftbalges bogenförmig nach außen und/oder innen oder auch sinusförmig sich erstreckende Bereiche auszubilden, die sich - aneinander anschließend bzw. ineinander übergehend oder voneinander beabstandet - ringförmig um die Längsachse der Luftfeder erstrecken. Solche Verstärkungsbereiche können dabei auch noch zusätzlich die genannten Verstärkungslagen im oder am Luftbalgmaterial aufweisen.

### Bezugszeichenliste

- 10: Luftfeder
- 12: Tauchkolben
- 14: Luftbalg
- 16: aufbauseitiger Bereich
- 17: mittlerer Bereich
- 18: achsseitiger Bereich
- 20: Deckel
- 22: Klemmvorrichtung
- 24: Verbindungsmittel / Schrauben und Muttern
- 26: Endbereich
- 28: Paßform
- 29: bereichsweise Gewebelage bzw. Verstärkungslage
- 30: Horn
- 32: Spitze des Horns
- 34: Oberfläche des Tauchkolbens
- 36: Anfangspunkt
- 38: Oberfläche des Luftbalgs
- 40: Minimum
- 42: Zugrichtung
- 44: Längsrichtung einer Achse
- 110: Luftfeder
- 112: Tauchkolben
- 114: Luftbalg
- 116: aufbauseitiger Bereich
- 117: mittlerer Bereich
- 118: achsseitiger Bereich
- 120: Deckel
- 122: Klemmvorrichtung
- 124: Verbindungsmittel / Schrauben und Muttern
- 126: Endbereich

## Patentansprüche

1. Luftbalg (14) für eine Luftfeder (10), wobei
- ein achsseitiger Bereich (18) des Luftbalgs (14) in einem Grundzustand eine vorgeformte Paßform (28) aufweist,
- die Paßform (28) derart ausgebildet ist, daß der achsseitige Bereich (18) an einem Horn (30) eines Tauchkolbens (12) anordenbar ist und
- der achsseitige Bereich (18) derart ausgelegt ist, daß bei einer Bewegung des achsseitigen Bereichs (18) zu einem aufbauseitigern Bereich (16) des Luftbalgs (14) hin der achsseitige Bereich (18) aufgrund seines Formgedächtnisses zuerst die Paßform (28) einnimmt, so dass ein Verkippen bzw. Einfalten des Luftbalgs (14) durch die Paßform (28) verhindert wird.

2. Luftbalg (14) nach Anspruch 1, wobei die Paßform (28) des achsseitigen Bereichs (18) derart ausgebildet ist, daß der Luftbalg (14) bei einer Bewegung des achsseitigen Bereichs (18) zu dem aufbauseitigen Bereich (16) hin über den Tauchkolben (12) abrollt.

3. Luftbalg (14) nach Anspruch 1 oder 2, wobei die Paßform (28) ausgelegt ist, daß nach einer im wesentlichen vollständigen Streckung des Luftbalgs (14) bei einer Bewegung des achsseitigen Bereichs (18) zu dem aufbauseitigen Bereich (16) hin der achsseitige Bereich (18) die Paßform (28) aufweist.

4. Luftbalg (14) nach einem der vorangegangenen Ansprüche, wobei die Paßform (28) so ausgelegt ist, ein Ende (32) des Horns (30) des Tauchkolbens (14) im wesentlichen zu umgreifen.

5. Luftbalg (14) nach einem der vorangegangenen Ansprüche, wobei der achsseitige Bereich (18) im Querschnitt im wesentlichen S-förmig ist.

6. Luftbalg (14) nach einem der vorangegangenen Ansprüche, wobei der achsseitige Bereich (18) einen größeren Wandstärke aufweist, als der restliche Luftbalg (14).

7. Luftbalg (14) nach einem der vorangegangenen Ansprüche, wobei der Luftbalg (14) mehrlagig aufgebaut ist.

8. Luftbalg (14) nach einem der vorangegangenen Ansprüche, wobei der achsseitige Bereich (18) mit Gewebelagen verstärkt ist.

9. Luftbalg (14) nach einem der vorangegangenen Ansprüche, wobei der Luftbalg zumindest bereichsweise mit Gewebelagen bzw. Verstärkungslagen verstärkt ist, welche die radiale Steifheit des Luftbalgs erhöhen.

10. Luftbalg (14) nach einem der vorangegangenen Ansprüche, wobei der Luftbalg (14) aus einem rückstellfähigen Material gebildet ist.

11. Luftbalg (14) nach einem der vorangegangenen Ansprüche, wobei der Luftbalg (14) aus Gummi besteht.

12. Luftbalg (14) nach einem der vorangegangenen Ansprüche, wobei der achsseitige Bereich (18) einen Bereich (26) aufweist, welcher ausgelegt ist, daß der Luftbalg (14) anhand eines Klemmelements (22) an dem Tauchkolben (12) befestigbar ist.

13. Luftbalg (14) nach einem der vorangegangenen Ansprüche, wobei in dem achsseitigen Bereich (18) ein Ring aus einem Metall eingearbeitet ist.

14. Luftfeder (10) mit einem Tauchkolben (12) und einem Luftbalg (14) nach einem der vorangegangenen Ansprüche.

15. Luftfeder (10) nach Anspruch 14, wobei der Tauchkolben einteilig ausgebildet ist.

16. Fahrzeugachssystem mit einem starren Achskörper, wobei an dem Achskörper zumindest eine Luftfeder (10) nach Anspruch 14 oder 15 angeordnet ist.

## Claims

1. A pneumatic suspension bellows or air bellows (14) for an air spring (10), wherein
- an axle-sided area (18) of the air bellows (14) in its basic state has a preformed fit (28),
- the fit (28) is designed such that the axle-sided area (18) can be arranged at a horn (30) of a plunger (12), and
- the axle-sided area (18) is adapted such that, upon movement or displacement of the axle-sided area (18) towards a structure-sided area (16) of the air bellows (14), the axle-sided area (18), due to its shape memory, firstly takes up the fit (28) so that a tilting or a folding-in of the air bellows (14) by the fit (28) is prevented.

2. An air bellows (14) according to claim 1, wherein the fit (28) of the axle-sided area (18) is formed such that the air bellows (14), upon movement of the axle-sided area (18) towards the structure-sided area (16), rolls off over the plunger (12).

3. An air bellows (14) according to claim 1 or 2, wherein the fit (28) is designed such that, after a substantially complete stretch of the air bellows (14) upon movement of the axle-sided area (18) towards the structure-sided area (16), the axle-sided area (18) has the fit (28).

4. An air bellows (14) according to any one of the foregoing claims, wherein the fit (28) is adapted to substantially encompass one end (32) of the horn (30) of the plunger (14).

5. An air bellows (14) according to any one of the foregoing claims, wherein the axle-sided area (18) is substantially S-shaped in cross section.

6. An air bellows (14) according to any one of the foregoing claims, wherein the axle-sided area (18) has a greater wall thickness than the rest of the air bellows (14).

7. An air bellows (14) according to any one of the foregoing claims, wherein the air bellows (14) has a multilayer structure.

8. An air bellows (14) according to any one of the foregoing claims, wherein the axle-sided bellows (14) is reinforced by fabric layers.

9. An air bellows (14) according to any one of the foregoing claims, wherein the air bellows at least in some areas is reinforced by fabric layers and reinforcing layers, respectively, increasing the radial stiffness of the air bellows.

10. An air bellows (14) according to any one of the foregoing claims, wherein the air bellows (14) consists of a resettable material.

11. An air bellows (14) according to any one of the foregoing claims, wherein the air bellows (14) consists of rubber.

12. An air bellows (14) according to any one of the foregoing claims, wherein the axle-sided area (18) has an area (26) adapted to have the air bellows (16) fixed to the plunger (12) by means of a clamping element (22).

13. An air bellows (14) according to any one of the foregoing claims, wherein a ring made of a metal is incorporated into the axle-sided area (18).

14. An air spring (10) with a plunger (12) and an air bellows (14) according to any one of the foregoing claims.

15. An air spring (10) according to claim 14, wherein the plunger is formed in one piece.

16. Axle system for a vehicle, having a rigid axle casing, wherein at least one air spring (10) according to claim 14 or 15 is arranged at the axle casing.

## Revendications

1. Soufflet pneumatique (14) pour une suspension pneumatique (10), dans lequel
- une zone (18) du soufflet pneumatique (14) du côté essieu présente une forme préformée ajustée (28) dans un état de base,
- la forme ajustée (28) est réalisée de telle façon que la zone (18) du côté essieu est susceptible d'être agencée sur une tête (30) d'un piston plongeur (12), et
- la zone (18) du côté essieu est conçue de telle façon que lors d'un déplacement de la zone (18) du côté essieu vers une zone (16) côté superstructure du soufflet pneumatique (14), la zone (18) du côté essieu adopte en première la forme ajustée (28) en raison de sa mémoire de forme, de sorte que l'on empêche un basculement ou un plissement du soufflet pneumatique (14) en raison de la forme ajustée (28).

2. Soufflet pneumatique (14) selon la revendication 1, dans lequel la forme ajustée (28) de la zone (18) du côté essieu est réalisée de telle manière que le soufflet pneumatique (14) se déroule sur le piston plongeur (12) lors d'un déplacement de la zone (18) côté essieu vers la zone (16) côté superstructure.

3. Soufflet pneumatique (14) selon la revendication 1 ou 2, dans lequel la forme ajustée (28) est conçu de telle sorte qu'après un étirement sensiblement complet du soufflet pneumatique (14) lors d'un déplacement de la zone (18) du côté essieu vers la zone (16) du côté superstructure, la zone (18) du côté essieu présente la forme ajustée (28).

4. Soufflet pneumatique (14) selon l'une des revendications précédentes, dans lequel la forme ajustée (28) est conçue de telle sorte qu'elle entoure sensiblement une extrémité (32) de la tête (30) du piston plongeur (14).

5. Soufflet pneumatique (14) selon l'une des revendications précédentes, dans lequel la zone (18) du côté essieu présent une section transversale sensiblement en forme de S.

6. Soufflet pneumatique (14) selon l'une des revendications précédentes, dans lequel la zone (18) du côté essieu présente une épaisseur de paroi plus importante que le reste du soufflet pneumatique (14).

7. Soufflet pneumatique (14) selon l'une des revendications précédentes, dans lequel le soufflet pneumatique (14) est réalisé à plusieurs couches.

8. Soufflet pneumatique (14) selon l'une des revendications précédentes, dans lequel la zone (18) du côté essieu est renforcée avec des couches textiles.

9. Soufflet pneumatique (14) selon l'une des revendications précédentes, dans lequel le soufflet pneumatique est renforcé au moins localement avec des couches textiles ou avec des couches de renforcement qui augmentent la rigidité radiale du soufflet pneumatique.

10. Soufflet pneumatique (14) selon l'une des revendications précédentes, dans lequel le soufflet pneumatique (14) est réalisé en un matériau capable de rappel.

11. Soufflet pneumatique (14) selon l'une des revendications précédentes, dans lequel le soufflet pneumatique (14) est en caoutchouc.

12. Soufflet pneumatique (14) selon l'une des revendications précédentes, dans lequel la zone (18) du côté essieu présente une région qui est conçue de telle sorte que le soufflet pneumatique (14) peut être fixé à l'aide d'un élément de serrage (22) sur le piston plongeur (12).

13. Soufflet pneumatique (14) selon l'une des revendications précédentes, dans lequel une bague en métal est intégrée dans la zone (18) du côté essieu.

14. Suspension pneumatique (10) comprenant un piston plongeur (12) et un soufflet pneumatique (14) selon l'une des revendications précédentes.

15. Suspension pneumatique (10) selon la revendication 14, dans lequel le piston plongeur est réalisé d'une seule pièce.

16. Système d'essieu de véhicule comprenant un corps d'essieu rigide, dans lequel au moins une suspension pneumatique (10) selon la revendication 14 ou la revendication 15 est agencée sur le corps d'essieu.
